# EUROPEAN PATENT SPECIFICATION

(11) **EP 1 236 179 B1**
(45) Date of publication and mention of the grant of the patent: **20.10.2004**
(21) Application number: 00980385.9
(22) Date of filing: 14.11.2000
(51) Int. Cl.: G07B 17/00

(54) **SYSTEM AND METHOD FOR MANAGING MULTIPLE POSTAL FUNCTIONS IN A SINGLE ACCOUNT**
SYSTEM UND VERFAHREN ZUM VERWALTEN VON MEHREREN POSTALISCHEN FUNKTIONEN IN EINEM EINZIGEN KONTO
GESTION DE PLUSIEURS FONCTIONS POSTALES SUR UN SEUL COMPTE ET SYSTEME A CET EFFET

(30) Priority: 16.11.1999 US 165885 P; 07.11.2000 US 708698
(43) Date of publication of application: 04.09.2002
(73) Proprietor: Neopost, Inc., Hayward, CA 94544 (US)
(72) Inventor: LEON, J., P., San Carlos, CA 94070 (US)
(74) Representative: David, Alain
(86) International application number: PCT/US2000/031319
(87) International publication number: WO 2001/037224

(56) References cited:
- EP-A- 0 855 687
- EP-A- 0 927 945
- WO-A-00/73963
- WO-A-99/39278
- US-A- 5 319 562
- UNITED STATES POSTAL SERVICE: "Performance Criteria For Information Based Indicia And Security Architecture For Open IBI Postage Evidencing System" INFORMATION BASED INDICIA PROGRAM, 25 June 1999 (1999-06-25), XP002161216

## Description

### BACKGROUND OF THE INVENTION

The present invention relates to the field of postage metering systems, and more particularly to methods and apparatus for dispensing postage using a plurality of postage printing systems.

Traditionally, consumers could purchase postage or stamps only from special locations designated by a postal authority. For example, in the U.S., consumers could buy postage only from post offices or other centers specifically authorized by the United States Postal Service (USPS) to sell postage. A disadvantage of this traditional postage buying method is that a consumer has to spend the time and make an effort to physically travel to the post office to buy postage.

In order to alleviate the inconveniences associated with traditional techniques described above, postal authorities such as the USPS, now allow postage to be printed by electromechanical postage meters which can be placed at the consumers' or users' premises. Such postage meters can be leased, rented, or purchased where allowed, from the postal authority or from vendors, such as Neopost™, who have been authorized by the postal authority to sell the meters. Typically, the user purchases a fixed amount of postage value beforehand and the meter is programmed with this amount. Subsequently, the user is allowed to print postage up to the programmed amount. The meter typically includes a print mechanism and mechanical arrangements and/or electronic control circuitry that direct the operation of the print mechanism.

Because the meter is capable of printing postage having a value, the postal authority generally mandates that, in order to maintain security of the postal funds, the postage meters be acquired and used/handled according to strict, complex, and often bureaucratic regulations imposed by the postal authority. For example, a special meter agreement has to be signed between the meter vendor and the user before the meter can be rented or leased by the user. The user also has to secure a postal license number from a postal authority and the meter has to be seeded with the postal license number. A postal license number is usually associated with an address of a user and is used by the postal authority to track the location of the postage meter and its user. A user using postage meters at multiple addresses has to secure multiple postal licenses, one for each address. Additionally, before a new meter is put into service, the meter has to be inspected and sealed by postal authority personnel. Once in service, each meter has to be periodically inspected by postal authority representatives. Further, postal regulations mandate that the postage meter itself incorporate a variety of security features thereby increasing the costs associated with acquiring and using the meter. As a result, renting or leasing, and subsequently using a postal meter can often be expensive, inconvenient, and involve many bureaucratic hurdles. Consequently, it is quite impractical for individual users to use postage meters.

With a view towards alleviating some of the above-mentioned problems and making use of advances in electronics and communications, the United States Postal Service (USPS) has promulgated specifications for its Information Based Indicia Program (IBIP). The IBIP program supports new methods of applying postage in lieu of conventional approaches that typically rely on the use of a postage meter mechanically printing the indicium on mailpieces.

The IBIP program contemplates postal indicia printed by conventional printers (e.g., thermal, inkjet, or laser) and including human-readable and machine-readable portions. An indicium refers to the imprinted designation or a postage mark used on mailpieces denoting evidence of postage payment. The machine-readable portion was initially specified to be a two-dimensional barcode symbology known as PDF417. The indicium content includes a digital signature for security reasons (to preclude forgery). There are separate specifications for open and closed systems.

The specifications have been updated over the last few years; the recent specifications for open and closed systems are:
- Information-Based Indicia Program (IBIP) Performance Criteria for Information-Based Indicia and Security Architecture for Open IBI Postage Evidencing Systems (PCIBI-O) (Draft February 23, 2000), and
- Information-Based Indicia Program (IBIP) Performance Criteria for Information-Based Indicia and Security Architecture for Closed IBI Postage Metering Systems (PCIBI-C) (Draft January 12, 1999).
These specifications are herein incorporated by reference in their entirety for all purposes.

An open system is defined as a general purpose computer used for printing information-based indicia, but not dedicated to the printing of those indicia. A closed system is defined as a system whose basic components are dedicated to the production of information-based indicia and related functions, that is, a device dedicated to creating indicia similar to an existing, traditional postage meter. A closed system may be a proprietary device used alone or in conjunction with other closely related, specialized equipment, and includes the indicium print mechanism.

The IBIP program specifies a postal security device (PSD) that manages the secure postage registers and performs the cryptographic operations of creating and verifying digital signatures.

The open system specification describes a host system (a computer or postage meter) connected to an unsecured printer (e.g., a laser printer or the like) and a PSD. The host system also provides communication facilities that allow the PSD's vendor and/or the USPS to establish communications with the PSD. Communications supported include troubleshooting, accounting transactions, and the like.

The PSD and host cooperate to provide an indicium, which is then transmitted to and printed by the unsecured printer. The specified indicium allows the use of an unsecured printer (e.g., thermal, inkjet, or laser) by using a digital signature, which also supports authentication of the mail piece. The indicium includes human-readable information and machine-readable information (initially specified as a PDF417 two-dimensional bar code). Each PSD is a unique security device, having core security functions such as digital signature generation and verification and secure management of information (e.g., descending and ascending registers).

WO0073963 discloses an on-line VBI printing system that includes one or more cryptographic modules and a central database. The cryptographic modules are capable of implementing a variety of required security standards. A client system provides a user friendly GUI for facilitating the interface of the user to the system. The GUI system includes wizards that help the user step-by-step with processes of installation, registration, and printing. In one aspect, the invention describes an on-line system for printing a value bearing item (VBI) that includes a client system for interfacing with a user comprising: a GUI for installing software for printing the VBI; a GUI for 8 registering the user in the system; and a GUI for managing the printing of the VBI 88; and a server system capable of communicating with the client system over a computer network for authorizing the client system to print the VBI.

In light of the above, there is a need for techniques which allow a user to buy postage without suffering the inconveniences described above. It is further desirable that the techniques be operable in a distributed environment and make use of communication networks such as the Internet.

### SUMMARY OF THE INVENTION

Aspects of the invention are disclosed in independent claims 1, 10, 11 and 20. Specific embodiments increase customer convenience and reduce overhead expenses by eliminating the need for administering multiple licenses and multiple customer accounts. In addition the consumer with at least one account, through a web interface, may either add or remove products without establishing or cancelling accounts or licenses.

In a representative embodiment, the present invention provides a method for managing postage products. The method comprises causing information about a plurality of products to be displayed. The display may be a web page, or a pull down menu, or the like, for example. Receiving a selection of one or more products and comparing the selection with subscription information about particular ones of the products to which a user is currently subscribed are also part of the method. Further, the method includes updating the subscription information based upon the selection and providing access to selected products based upon the updated subscription information.

In a specific embodiment, the method provides access to selected products based upon updated subscription. The method comprises adding a subscription to a product selected in the selection information, if the product was not in the subscription information. The method further comprises determining if hardware is required by the selected product. If hardware is required by the selected product, then whether the hardware has not been previously sent to a consumer making the selection is determined. If the hardware has not been sent, then the hardware is sent to the consumer in accordance with the method. In a specific embodiment, the method comprises determining if an account is required to use the selected product. If the product requires an account, information about a consumer making the selection of the product is obtained and an account for the consumer is created using the information. In a specific embodiment, the method comprises determining if a postal license is required by the selected product. If a postal license is needed, information is obtained about the consumer and a postal license is obtained for the consumer using the information.

In a specific embodiment, the method provides access to selected products based upon the updated subscription. The method comprises deleting a subscription to a product de-selected in the selection information, if the product was in the subscription information. The method further comprises determining if hardware to be used with the deselected product was loaned to the consumer. If hardware was loaned, then whether deselecting the product causes the hardware to no longer be required by the consumer is determined based upon the consumer's subscription information. If the hardware is no longer needed, a return merchandise authorization is sent to the consumer. In a specific embodiment, the method comprises determining if an account is required by the de-selected product. If the product requires an account, it is determined whether an account is required by any remaining products subscribed to by the consumer. If an account is no longer required, permission from the consumer to deactivate the account is obtained. If the consumer provides permission, the account is deactivated. The method further comprises determining if a postal license is required by the de-selected product. If the product requires a postal license, then whether a postal license is required by any remaining products subscribed to by the consumer is determined. If a postal license is no longer required, permission from the consumer to deactive the postal license is obtained. If the consumer provides permission, the postal license for the consumer is deactivated.

Alternative embodiments include an apparatus having a processor, memory, display and input device that perform the above described method.

In another representative embodiment, the present invention provides a computer program product for managing postage products. The computer program product comprises a computer readable storage medium for holding code that performs a variety of tasks. The product includes code that causes information about a plurality of products to be displayed; code that receives a selection of at least one of the plurality of products and code that compares the selection with subscription information about ones of the plurality of products currently subscribed. Code that updates the subscription information based upon the selection and code that provides access to selected products based upon the updated subscription information are also part of the program product.

In a yet further representative embodiment, the present invention provides a system for managing postage products. The system comprises a variety of components, such as one or more clients interconnected to one or more servers by a network, a database, and a second network that interconnects the one or more servers and the database. The servers cause information about one or more products to be displayed at the clients. The clients receive a selection from among the plurality of products from an input device. Thereupon, the clients forward the selection to the servers, which compare the selection with subscription information about the products currently subscribed. The subscription information stored in the database is updated based upon the selection, and the server provides access to selected products based upon the updated subscription information.

The numerous benefits provided by embodiments according to the present invention are described throughout the present specification. A further understanding of the nature and advantages of the invention herein may be realized by reference to the remaining portions of the specification and the attached drawings.

### BRIEF DESCRIPTION OF THE DRAWINGS

Fig. 1 is a block diagram of a distributed computer network which may incorporate an embodiment of the present invention;
Fig. 2 is a block diagram of an exemplary computer system according to an embodiment of the present invention;
Fig. 3 is an expanded block diagram of a postage vendor system according to an embodiment of the present invention;
Fig. 4 is a diagram of a representative user interface used in a specific embodiment of the present invention;
Fig. 5 is a flowchart of representative processing in a specific embodiment of the present invention;
Fig. 6 depicts an exemplary individual pre-printed label on which an indicium may be printed according to an embodiment of the present invention;
Fig. 7 depicts an individual label with an indicium printed on it according to an embodiment of the present invention; and
Fig. 8 depicts a sheet of pre-printed labels according to an embodiment of the present invention.

### DESCRIPTION OF THE SPECIFIC EMBODIMENTS

### System Hardware Overview

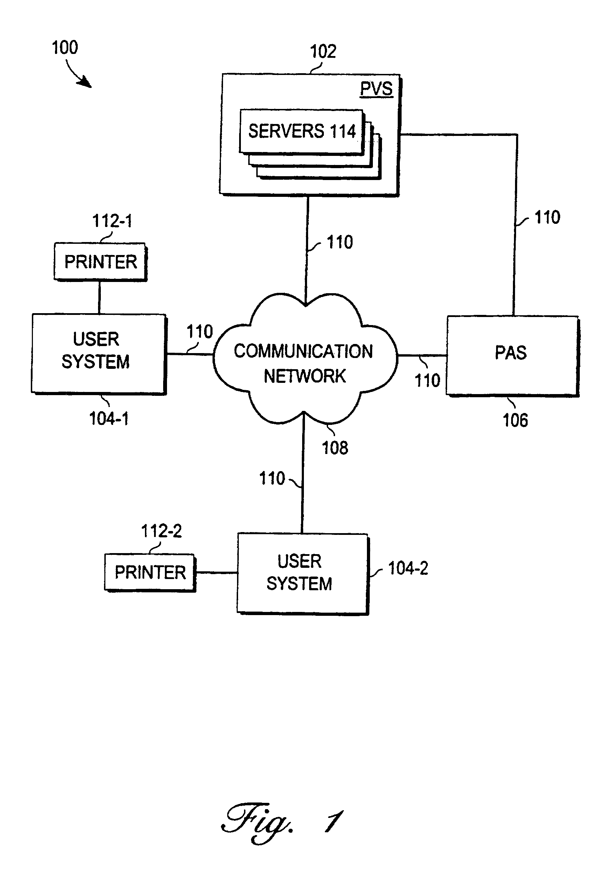

The present invention provides techniques for managing subscriptions to a plurality of postage printing products. Fig. 1 is a simplified block diagram of a distributed computer network 100 which may incorporate an embodiment of the present invention. Computer network 100 includes one or more user computer systems 104-1 and 104-2, at least one postage vendor system (PVS) 102, and a postal authority system (PAS) 106 coupled to a communication network 108 via a plurality of communication links 110. User systems 104 may optionally be coupled to one or more printers 112 or other like printing devices, and other peripheral devices (not shown) such as a weighing scale.

Communication network 108 provides a mechanism for allowing the various components of distributed network 100 to communicate and exchange information with each other. Communication network 108 may itself be comprised of many interconnected computer systems and communication links. Communication links 18 may be hardwire links, optical links, satellite or other wireless communications links, wave propagation links, or any other mechanisms for communication of information. While in one embodiment communication network 108 is the Internet, in other embodiments, communication network 108 may be any suitable computer network. Distributed computer network 100 depicted in Fig. 1 is merely illustrative of an embodiment incorporating the present invention and does not limit the scope of the invention as recited in the claims. One of ordinary skill in the art would recognize other variations, modifications, and alternatives. For example, more than one PVS 102 may be coupled to communication network 108. Further, one or more printers 112 may optionally be coupled to a single user system 104, or alternatively a plurality of user systems 104 may share one or more common printers. Other devices such as weighing machines for weighing mail pieces, fax machines, scanners, etc. may also be coupled to user systems 104.

User systems 104 allow users of the present invention, for example, postage consumers, to interact with and buy postage from PVS 102. These users may include one or more human beings interacting with an user system 104, one or more processes executing on user system 104 or systems coupled to user systems 104, devices coupled to user system 104, or other entities capable of interacting with PVS 102. Various different types of interactions with PVS 102 are facilitated by user systems 104. For example, users may use user systems 104 to configure requests to purchase postage from PVS 102. These user purchase requests are then communicated from user systems 104 to PVS 102 via communication network 108. In response to the user requests, user systems 104 may receive information for printing indicia (or a single indicium) from PVS 102. A user may then use user system 104 to print the indicia using printer devices coupled to or accessible to user system 104. The indicia may be printed on labels, on paper, on the mail pieces themselves, or on other like media. In alternative embodiments of the present invention, a user using user system 104 may store the information for printing indicia received from PVS 102 on a storage medium, such as a computer disk, for subsequent printing of the indicia.

Users may also use user systems 104 to perform other activities such as browse web-pages stored by PVS 102, register as users of services provided by PVS 102, provide financial and credit information for consummating commercial transactions with PVS 102, review status of user accounts if such accounts are maintained by PVS 102, review postage purchase history, access help or customer services provided by PVS 102, and to perform other like activities. Accordingly, in a client-server environment, user system 104 typically operates as a client requesting information from PVS 102 which operates as a server which performs processing in response to the client request and provides the requested information to the client systems. It should be apparent that a particular user system 104 may act both as a client or a server depending on whether the user system is requesting or providing information.

As stated above, a user may use user system 104 to browse or interact with web pages provided by PVS 102. These web pages may be stored by one or more web servers in PVS 102 and may be accessed by users of user system 104 via a browser program executing on user system 104. Examples of browser programs include the Internet Explorer browser program provided by Microsoft Corporation, the Netscape Navigator browser provided by Netscape Corporation, and others. In the Internet and World Wide Web (the "Web") environment, the web pages may be written in Hypertext Markup Language (HTML) and may incorporate any combination of text, graphics, audio and video content, software programs, and other data. Web pages may also contain hypertext links to other web pages. Each web page is uniquely identified by an address called a Uniform Resource Locator (URL) that enables users to access the web page. Users may access web pages by providing URL information to the browser, either directly or indirectly, and in response, a web page corresponding to the user-specified URL is downloaded from a server coupled to communication network 108 to the requesting user computer 104. The downloaded web page may then be viewed by the user using the browser.

According to the teachings of the present invention, PVS 102 is responsible for dispensing postage to users in response to postage purchase requests received from user systems 104. As shown in Fig. 1, PVS 102 may itself be comprised of multiple interconnected computer and server systems 114 and communication links, as will be described below. PVS 102 may be configured to receive postage requests from user systems 104, validate the postage requests, generate information for printing indicia in response to the postage requests, perform security functions related to the postage transaction, manage funds related to the postage transaction, communicate the information for printing the indicia to the requesting user systems 104, maintain users accounts, and several other functions. These functions are generally performed by software code modules executed by PVS 102. However, it should be apparent that these functions may be also performed by software modules or hardware modules of PVS 102, or combinations thereof.

According to an embodiment of the present invention, the information for printing indicia generated by PVS 102 is generally along the lines specified by the IBIP specifications published by the United States Postal Service (USPS). As indicated above, the IBIP specifications propose new methods for generating postage which will make use of technological advances in the fields of computers and communication networks while enhancing the security of the postage. These methods are supposed to retrofit and augment existing postage meters using new technology known as information-based indicia.

For some of the products, the security-critical functions performed by PVS 102 as part of generating the information for printing the indicia generally comply with the security-critical functions performed by the Postal Security Device (PSD) described in the IBIP specifications. For some of the products, PVS 102 may also be configured to perform functions performed by the Host System described in the IBIP specifications. For other products, the PSD and host are at the user site. The entire contents of the IBIP specifications are herein incorporated by reference for all purposes. Further, details regarding the functions performed by PVS 102 are provided below.

Referring back to Fig. 1, postal authority system (PAS) 106 may comprise one or more computer systems managed by a postal authority authorized to regulate and control all postal matters. Examples of postal authorities include the United States Postal Service (USPS), France's La Poste, UK's Royal Mail, and others. In most instances, the postal authority is a governmental or quasi-governmental agency authorized to oversee postal matters. PAS 106 may be coupled to PVS 102 via communication network 108 or directly via some other communication link 110. The information exchanged between PVS 102 and PAS 106 may include finance information, information required by the postal authority for audit purposes, status information, security information, and other like information. The information required by the postal authority for audit purposes may include information identifying the postage buyers, the postage value and amount purchased by the buyers, and other information. PVS 102 may be configured to download information to PAS 106 on a periodic basis using batch processing, or upon the occurrence of certain events. PVS 102 may also be configured to purchase postage from PAS 106.

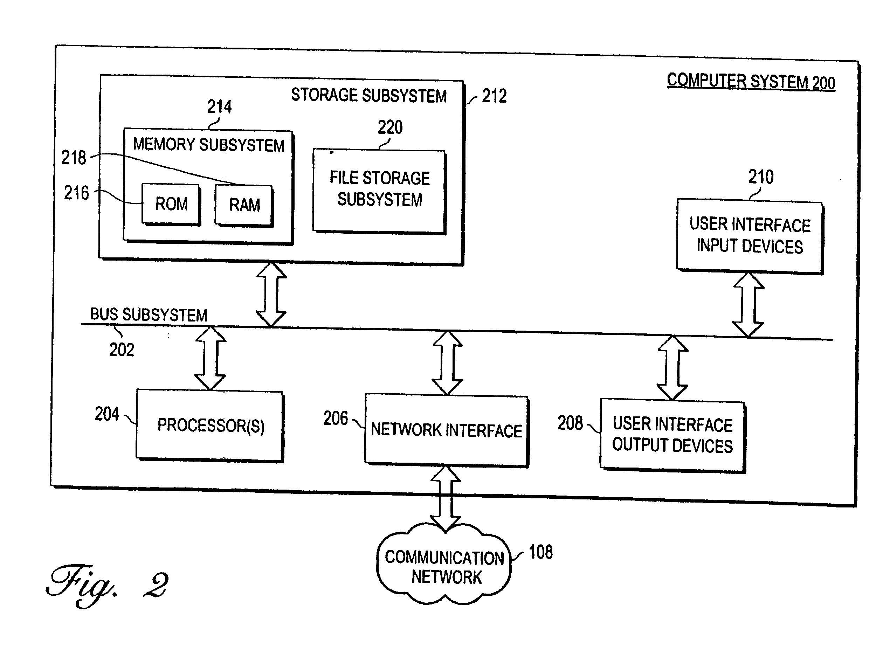

Fig. 2 is a simplified block diagram of an exemplary computer system 200 according to an embodiment of the present invention. Computer system 200 may function as user system 104, as PVS 102 or as one of the computer systems which make up PVS 102, as PAS 106, or other like system. Computer system 200 typically includes at least one processor 204, which communicates with a number of peripheral devices via bus subsystem 202. These peripheral devices typically include a storage subsystem 212, comprising a memory subsystem 214 and a file storage subsystem 220, user interface input devices 210, user interface output devices 208, and a network interface subsystem 206. The input and output devices allow user interaction with computer system 200. It should be apparent that the user may be a human user, a device, a process, another computer, and the like. Network interface subsystem 206 provides an interface to outside networks, including an interface to communication network 108, and is coupled via communication network 108 to corresponding interface devices in other computer systems.

User interface input devices 210 may include a keyboard, pointing devices such as a mouse, trackball, touchpad, or graphics tablet, a scanner, a barcode scanner for scanning article barcodes, a touchscreen incorporated into the display, audio input devices such as voice recognition systems, microphones, and other types of input devices. In general, use of the term "input device" is intended to include all possible types of devices and ways to input information into computer system 200 or onto communication network 108.

User interface output devices 208 may include a display subsystem, a printer, a fax machine, or non-visual displays such as audio output devices. The display subsystem may be a cathode ray tube (CRT), a flat-panel device such as a liquid crystal display (LCD), or a projection device. The display subsystem may also provide non-visual display such as via audio output devices. In general, use of the term "output device" is intended to include all possible types of devices and ways to output information from computer system 200 to a user or to another machine or computer system.

Storage subsystem 212 stores the basic programming and data constructs that provide the functionality of the computer system. For example, the various modules implementing the functionality of the present invention may be stored in storage subsystem 212 of PVS 102. These software modules are generally executed by processor(s) 204. In a distributed environment, the software modules may be stored on a plurality of computer systems and executed by processors of the plurality of computer systems. Storage subsystem 212 also provides a repository for storing the various databases storing information according to the present invention. Storage subsystem 212 typically comprises memory subsystem 214 and file storage subsystem 220.

Memory subsystem 214 typically includes a number of memories including a main random access memory (RAM) 218 for storage of instructions and data during program execution and a read only memory (ROM) 216 in which fixed instructions are stored. File storage subsystem 220 provides persistent (non-volatile) storage for program and data files, and may include a hard disk drive, a floppy disk drive along with associated removable media, a Compact Digital Read Only Memory (CD-ROM) drive, an optical drive, removable media cartridges, and other like storage media. One or more of the drives may be located at remote locations on other connected computers at another site on communication network 108. Information stored according to the teachings of the present invention may also be stored by file storage subsystem 220.

Bus subsystem 202 provides a mechanism for letting the various components and subsystems of computer system 200 communicate with each other as intended. The various subsystems and components of computer system 200 need not be at the same physical location but may be distributed at various locations within distributed network 100. Although bus subsystem 202 is shown schematically as a single bus, alternative embodiments of the bus subsystem may utilize multiple busses.

Computer system 200 itself can be of varying types including a personal computer, a portable computer, a workstation, a computer terminal, a network computer, a mainframe, or any other data processing system. Due to the ever-changing nature of computers and networks, the description of computer system 200 depicted in Fig. 2 is intended only as a specific example for purposes of illustrating the preferred embodiment of the computer system. Many other configurations of a computer system are possible having more or fewer components than the computer system depicted in Fig. 2. Client computer systems and server computer systems generally have the same configuration as shown in Fig. 2, with the server systems generally having more storage capacity and computing power than the client systems.

### Specific Hardware Example

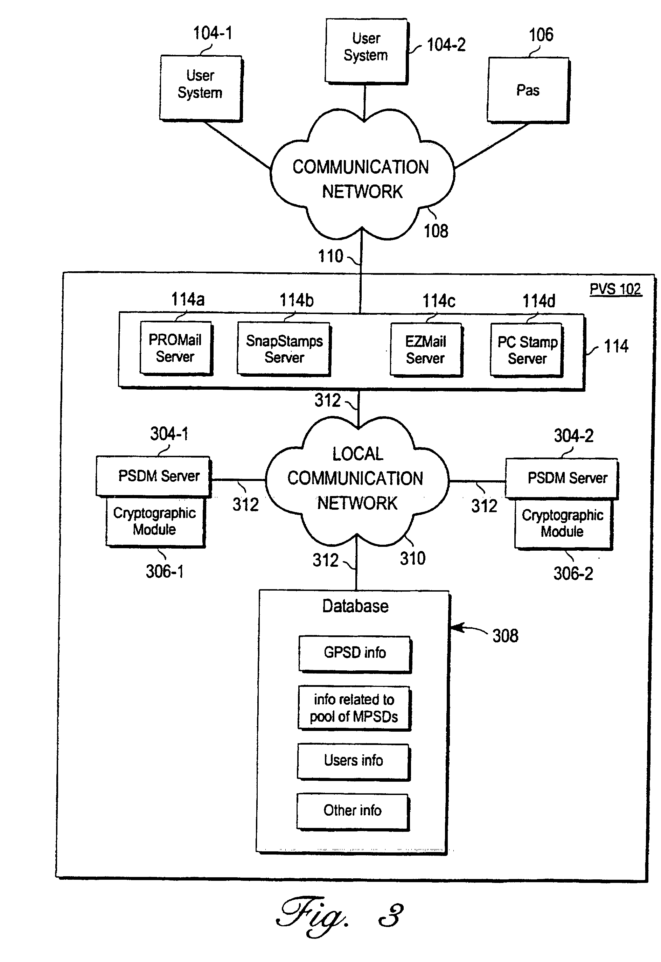

Fig. 3 depicts an expanded block diagram of PVS 102 according to an embodiment of the present invention. As shown in Fig. 3, PVS 102 may comprise one or more servers 114, one or more postal security device module (PSDM) servers 304 (with associated cryptographic modules 306), and a database 308 coupled to a local communication network 310 via a plurality of communication links 312. Local communication network 310 provides a mechanism for allowing the various components of PVS 102 to communicate and exchange information with each other. Local communication network 310 may itself be comprised of many interconnected computer systems and communication links. Communication links 312 may be hardwire links, optical links, satellite or other wireless communications links, wave propagation links, or any other mechanisms for communication of information. The configuration of PVS 10 depicted in Fig. 3 is merely illustrative of an embodiment incorporating the present invention and does not limit the scope of the invention as recited in the claims. One of ordinary skill in the art would recognize other variations, modifications, and alternatives.

Servers 114 facilitate a large variety of tasks. One or more of servers 114 may host the postage vendor's web site and store web pages provided by the postage vendor. One of the servers 114 is responsible for receiving URL requests from user systems 104 and for forwarding web pages corresponding to the URL requests to the requesting user systems 104. As previously stated, these web pages allow a user to interact with PVS 102. e.g. to configure requests to PVS 102 to purchase postage, or to subscribe to postage products. When user system 104 requests communication with PVS 102, one of servers 114 may be configured to establish a communication link between user system 104 and PVS 102. For example, one or more of the servers 114 may establish a secure Internet socket link. e.g. a SSL 2.0 link, between PVS 102 and user system 104. The information communicated between user system 104 and PVS 102 may be SSL encrypted using various encryption levels, e.g. 40-bit encryption, 128-bit encryption, and the like. Servers 114 may also incorporate a firewall which shields the internal PVS network from communication network 108 and user systems 104 and other resources coupled to communication network 108. According to an embodiment of the present invention, one or more of the servers 114 is responsible for receiving requests from user systems 104 to purchase stamps and for performing load distribution and fail-over processing associated with the requests. One of the servers 114 may also be configured to control the downloading of printer control programs from PVS 102 to user system 104.

Servers 114 comprise a plurality of servers, some of which are targeted to providing a particular service to the customer. In the specific embodiment illustrated by Fig. 3, servers 114 comprise a PROmail server 114a, a SnapStamps server 114b, an EZMail server 114c, and a PC Stamp server 114d. PROMail™, SnapStamps™, EZMail™, and PC Stamp™ are postage printing products provided by the vendor to consumers. These products have complementary functionalities, which will be discussed in greater detail below. Consumers may subscribe to one or more of the products. Further, consumers can alter their selection of products according to the teachings of the present invention. It is noteworthy that, although Fig. 3 illustrates these servers separately, in specific embodiments, one or more of the servers 114 may co-reside on a single machine, or may be distributed across a plurality of platforms. Further, not all of the illustrated components of servers 114 will be used in certain specific embodiments. On the other hand, in other specific embodiments, other servers and/or modules will be included that accommodate other products.

Each PSDM server 304, in conjunction with one or more cryptographic modules 306 coupled to the PSDM server, is responsible for generating the information for printing the indicium in response to requests to buy postage received from one or more user systems 104 availing themselves of certain products. According to an embodiment of the present invention, functions performed by PSDM server 304 include functions performed by a Postal Security Device (PSD) as described in the IBIP specifications published by the USPS. For example, functions performed by PSDM server 304 include initialization and creation of PSD resources, digital signature generation, management of funds related to the postage dispensed by PVS 102, generation of information for printing the indicia, key handling, and other functions. PSDM servers 304 are designed to operate in a clustered environment to allow for expandability to meet the needs of a rapidly growing user base. According to an embodiment of the present invention, PSDM server 304 communicates with servers 114 using a DCOM (Microsoft's Distributed Component Object Model) interface.

Each PSDM server 304 may comprise one or more cryptographic modules 306 for performing cryptographic functions and for generating digital signatures. Various keys for performing security-critical functions such as digital signature generation, hashing, encryption, etc. are stored by cryptographic module 306. According to an embodiment of the present invention, cryptographic module 306 is a nCipher nFast/CA module which is validated to FIPS 140-1 Level 3 security.

According to the teachings of the present invention, PSDM server 304 uses PSD resources to generate indicia and to track monetary amounts related to the postage dispensed by PVS 102. In order to increase the indicia generation throughput, a plurality of shared PSD resources may be used by PSDM servers 304 to generate the indicia. By using a plurality of PSD resources, multiple PSDM servers 304 can run concurrently, producing indicia in parallel without the bottleneck of sharing a single PSD resource.

According to an embodiment of the present invention, each PSD resource comprises a unique PSD identifier (e.g. a 4-byte identifier), a descending register (DR) value (e.g. a 4-byte value), an ascending register (AR) value (e.g. a 5-byte value), and a control code (e.g. a 20-byte value). The PSD identifier uniquely identifies each PSD resource. The ascending register (AR) value represents the total monetary value of all indicia ever produced by the PSD during its life cycle. The descending register (DR) value indicates the available funds assigned to the PSD resource which may be used to dispense postage. According to an embodiment of the present invention, the monetary values stored by the AR and DR values are measured in 1/10 of 1-cent increments as specified in the IBIP specifications. The control code is a secure hash of the PSD identifier, the PSD AR value, and the PSD DR value. According to an embodiment of the present invention, the control code is generated using HMAC-with-SHA1 (RFC 2104) using a secret HMAC key stored by cryptographic module 306.

According to the teachings of the present invention, monetary amounts related to the postage dispensed by PVS 102 are tracked using a global PSD (GPSD) resource and a pool of PSD resources referred to as mini-PSDs (or MPSDs). According to an embodiment of the present invention, eight MPSD resources may be used by a single cryptographic module 306 associated with PSDM server 304 to concurrently generate information for printing indicia. The sum of the AR value and the DR value of the GPSD represents the total amount of postage bought from the postal authority, for example, from the USPS, by the postage vendor provider (e.g. Neopost) of PVS 102. The sum totals of the AR and DR values of the MPSD resources matches the AR and DR values of the GPSD resource. Information related to the GPSD resource and MPSD resources may be stored in database 308.

According to an embodiment of the present invention, each MPSD resource may be assigned a unique number by the postage vendor. A number assigned to a particular MPSD may be included in the information for printing an indicium generated by the particular MPSD and printed as part of the indicium. For example, the number "042N50000051" uniquely identifies the MPSD resource which was used for generating the information for printing the indicium. This MPSD serial number is like a meter number and may be used to track the MPSD resource responsible for generating information for printing the indicium. According to an embodiment of the present invention, the MPSD serial number "042N50000051" may represent a combination of:
"04" - manufacturer identifier assigned by the postal authority to the postage vendor;
"2N" - model identifier (details provided below);
"50000051" -number of MPSD, which in turn may include a global PSD number "0000", a machine number "0", and a PSD number "051." Details related to these numbers is provided below. A unique certificate number assigned by a postal authority may also be assigned to each MPSD uniquely identifying the MPSD.

Database 308 acts as a repository for storing information related to the postage dispensing process. For example, database 308 may store information related to the PSD resources (both GPSD and MPSDs), information used for generation of digital signatures, and other like information. Database 308 may also store information about users who have purchased postage from PVS 102. Information related to users who have registered with PVS 102, e.g. user account information, user preferences information, etc. may also be stored by database 308. This information is accessible by, and may be shared among the PROmail server 114a, the SnapStamps server 114b, the EZMail server 114c, and the PC Stamp server 114d. Database 308 may also store the postal license number assigned to PVS 102 by the postal authority. Other information related to the dispensing of postage may also be stored by database 308. The term "database" as used in this application may refer to a single database or to a plurality of databases coupled to local communication network 310. Further, database 308 may be a relational database, an object-oriented database, a flat file, or any other way of storing information. According to an embodiment, database 308 is coupled to servers 114 and to PSDM server 304 via an ODBC interface.

### System Software Overview

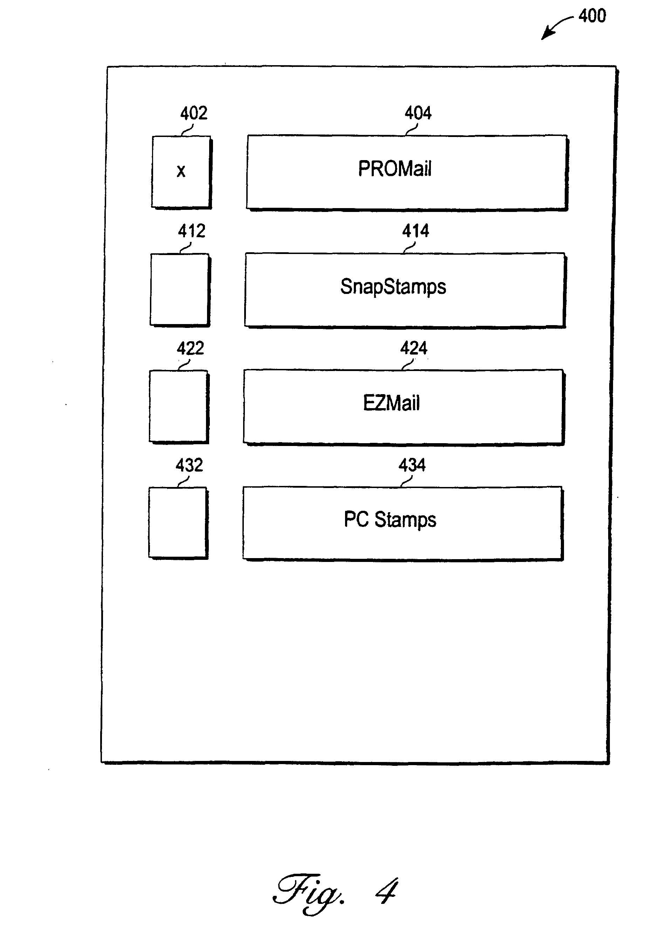

Fig. 4 illustrates a representative user interface provided by a specific embodiment according to the present invention. In Fig. 4, a web page 400 lists representative products made available to the user in this specific embodiment. Web page 400 lists a plurality of postage products, along side a plurality of corresponding selection boxes. Specifically, Fig. 4 illustrates a first product, PROMail 404, having a selection box 402, associated with it. In this embodiment, the user selects to subscribe to the PROMail product by placing an "X," in selection box 402. Other information, not shown, can be included along with the product name. For example, a description of the product, a price, a set of prerequisites, and the like, can accompany the PROMail identifier 404. The products listed in web page 400 include services or goods or both. In the specific embodiment illustrated by Fig. 4, other products which may be selected include, SnapStamps 414, which may be selected using box 412, EZMail 424, with corresponding box 422, and PC Stamps 434, accompanied by box 432.

If a selection box is not checked, then the corresponding product is not being used by the consumer, but is available for selection and use. While Fig. 4 shows four products which may be subscribed to, there may be any number of products available to the consumer in various specific embodiments. Thus, Fig. 4 is intended to be merely illustrative and not limiting of the many embodiments of the present invention. The consumer may add or remove products, 404, 414, 424, and 434, by checking or unchecking boxes 402, 412, 422, and 432. In a specific embodiment, if the consumer does not have an account, one of the servers 114 sends one or more links to web pages that enable the consumer to set up a new account. If the consumer de-selects a product that includes hardware provided to the consumer, a return merchandise authorization (RMA) is sent to the consumer in order to return the hardware (and/or software) that she was provided by the vendor/rentor. For example, the consumer may have to return a PSD, a postage label printer device, or a CD-ROM to the vendor/rentor. In a specific embodiment, if the consumer unchecks all boxes, one of the servers 114 displays a web page asking if the consumer desires to terminate use of all of the products. In another embodiment, at least one of the boxes must be checked, indicating the consumer has an account. In yet another embodiment, the web page display 400 is replaced by a pull down menu, which the consumer may use to select or de-select products. The pull down menu may include associated check marks indicating wmcn options have been selected. Options without check marks are unused options. The pull down menu may be on the vendor's software window(s) or on another vendor's window(s), in products such as, for example in Navigator, by Netscape, Microsoft Word, Lotus Notes, and the like.

### Exemplary Products

PROMail, also known as "SimplyPostage", provides a PSD packaged together with a dedicated postal printer at the consumer's location. The PSD/printer combination prints postage indicia on adhesive labels. In a presently preferred embodiment, this product option provides automated mailing and shipping, using an integrated postage printer and scale, along with software that manages postage expenses. The PROMail host at the user site communicates with the PROMail server 114a via communication network 108 for audit and postage value downlaod transactions. Information about the user, such as an account number, billing information, address, and postage license number are stored in database 308, which PROMail server 114a accesses via local communication network 310. With the PROMail product, the user need not provide a general-purpose printer on which to print postage. In specific embodiments, preprinted postal labels that include security enhancing features, such as serial numbers, watermarks, microprint, fluorescent ink imprints, and the like, can be used to print postage. In specific embodiments, PROMail's dedicated postage printer provides greater speed of operation as compared with other techniques. Further, in specific embodiments, the capability to print address information as well as postage in a single pass through the printer are provided. Approaches centered about dedicated hardware are well suited to consumers who process parcels, and/or consumers who do not wish to use a general-purpose digital printer to print postage.

SnapStamps is an internet-based postage metering service, in which the functionality of a postal secure device (PSD) resides in the service company's servers 304-1 and 304-2. This product option enables postage to be printed using a general purpose printer. The consumer accesses SnapStamps using the Internet, for example, without having to install software, or hook up hardware. The SnapStamps user communicates with the SnapStamps server 114b via communication network 108. The user provides a credit card information to the SnapStamps server 114b, which verifies the credit card. Provided the credit card information is valid, the server 114b forwards instructions for printing one or more postage indicia to the SnapStamps user via communication network 108. The user then prints one or more postage indicia on serialized labels by forwarding the information to print the postage indicia to a general purpose printer. This product option enables consumers to print stamps on labels, which stamps do not expire. The consumer subscribing to SnapStamps purchases postal credit using a credit card, for example, over the Internet. The consumer does not need to establish an account, nor install software in order to purchase postage credit and print postage indicia. Once purchased, the postage credit is drawn upon to print postage using the consumer's general-purpose digital laser printer, for example. Payment may be made to the post office directly, or through the service company, by means of a credit card, smart card or electronic funds transfer from the consumer's bank account. This product enables consumers to purchase postage credit and print postage without requiring dedicated hardware and software, and without requiring the consumer establish an account prior to purchasing the postage credit.

EZMail, also known as "PostagePlus", is an internet-based postage metering service, in which a postal secure device (PSD) resides in the service company's server 304-1. This product enables postage to be printed using a general purpose printer. The consumer subscribing to EZMail accesses an account via the Internet in order to purchase postage credit as-needed. The EZMail user communicates with the EZMail server 114c via communication network 108. Information about the user, such as an account number, billing information, address, and postage license number are stored in database 308, which the EZMail server 114c accesses via local communication network 310. Once purchased, the postage credit may be drawn upon to print postage using the consumer's general-purpose digital laser printer, for example. Payment may be made to the post office directly, or through the service company, by means of a credit card, smart card or electronic funds transfer from the consumer's bank account. In a presently preferred embodiment, the EZMail product option comprises web-based software that automatically calculates postage for First Class, Express, Priority, and Post Cards. Further, the software verifies address and zip code information, prints envelopes and labels, and tracks mailing information. A list function enables the consumer to integrate address book information with the product. This product enables consumers to purchase postage credit and print postage without requiring dedicated hardware, and without a pre-payment of postage. This product is especially convenient for occasional use consumers, who process only a few items at a time.

PC Stamp provides a postage metering system in which a PSD device is provided to the consumer to use at the consumer's location. The consumer interfaces the PSD with a computer and general-purpose laser printer. This product option comprises a wallet-sized device that attaches to the consumer's computer through a standard serial port, and the like, and functions as a postage meter, tracking and storing postage credit. Postage credit is purchased by the consumer in bulk, via the Internet or a dedicated telephone-line system, and recorded in the PSD. Offline, the consumer draws on the supply of prepaid credit to print postage directly on envelopes or onto labels, by means of the consumer's general-purpose printer. This product delivers postage relatively quickly, in specific embodiments. The software enables envelopes to be simultaneously imprinted with address information as well as postage, so that the complete preparation of the envelope for mailing can be accomplished with a single pass through the printer. This product is especially suited for moderate amounts of bulk mail, such as are those produced by small businesses, local organizations, churches, schools, and the like.

Table 1 summarizes the products available in a specific embodiment, along with corresponding consumer requirements:

**Table 1**

| **Consumer Requirements** | PROMAIL | SNAPSTAMPS | EZMAIL | PC STAMP |
|---|---|---|---|---|
| **Computer with modem** | ◆ | ◆ | ◆ | ◆ |
| **Software at User's Location** | ◆ | | ◆ | ◆ |
| **General Purpose Digital Printer** | | ◆ | ◆ | ◆ |
| **Account with provider** | ◆ | | ◆ | ◆ |
| **PSD** | ◆ | | | ◆ |
| **Postal License** | ◆ | | ◆ | ◆ |

In a specific embodiment, the consumer installs a single software application on a locally available computer that includes the functionality of the applications described above. This application may be downloaded from a computer server, such as for example, one of servers 114, or from a server of another vendor/service company. This specific embodiment provides advantages of exploiting commonality of hardware and software that exists between the different products, enabling the consumer's multiple products to be administered by the service company using a single account, and by the postal authorities with a single license.

In a specific embodiment, a plurality of products is installed initially, irrespective of the consumer's preference for products. In this specific embodiment, when the consumer makes a selection or deselection, the service company sets or resets on-line flags in the program to enable the features that were purchased/leased, and/or to disable those that were not. In another embodiment the software is installed on-line on an as needed basis.

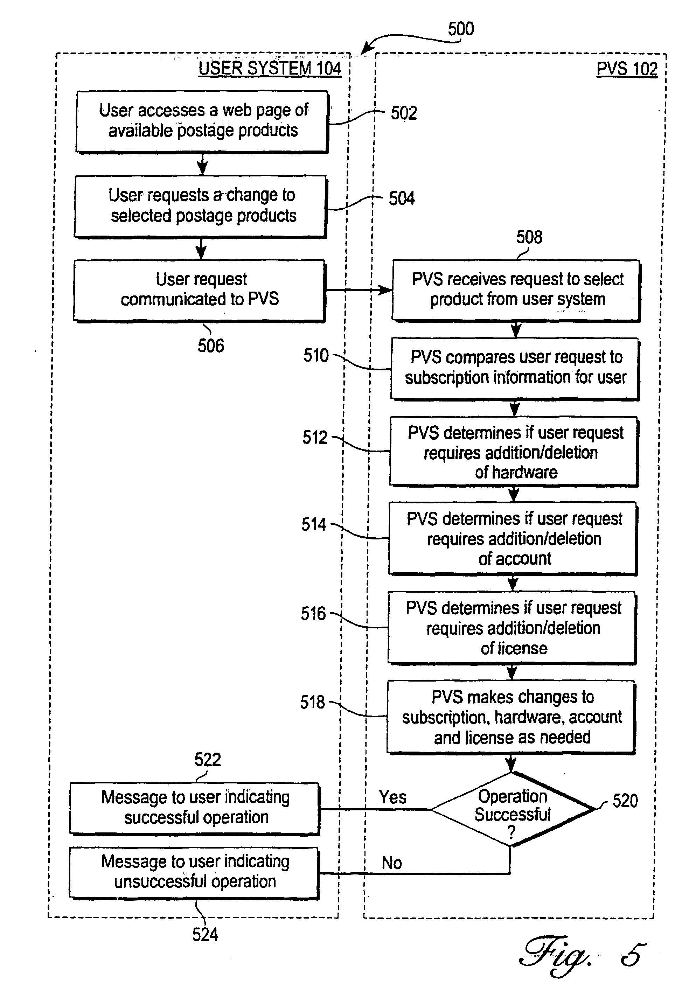

Fig. 5 is a simplified high-level flowchart 500 showing processing performed by user system 104 and PVS 102 for managing postage dispensing products according to an embodiment of the present invention. As shown in Fig. 5, processing is generally initiated when a user accesses a web page provided by PVS 102 using user system 104 (step 502). As described above, the user may access PVS provided web pages by providing URL information corresponding to the web pages to the browser. Using the web page, the user may then configure a request to change a subscription to self print postage products (step 504). For example, a user with a subscription to PROMail may request addition of a non-hardware product, such as SnapStamps, because the user forgot to bring the PROMail postage label printer along on a business trip.

According to an embodiment of the present invention, a user may be required to register as a user of PVS 102 and open an account with PVS 102 if the user subscribes to account based products from PVS 102, or if the user is not previously known to PVS 102. As part of this registration process, the user may be asked to provide information to PVS 102 such as information identifying the user, credit-card or other like information which may be used by PVS 102 to bill for postage purchased by the user, and other information related to the user. The information provided by the user may be stored by PVS 102 in database 308 and a unique identifier may be assigned to the user to uniquely identify the user. The user may also be allowed to select a password to access the user's account. The user may also be allowed to configure user preferences related to postage buying activities. The user may also be allowed to store funds in the account which may be used for postage purchases. It should be apparent that in alternative embodiments of the present invention, that the user may be allowed to buy postage from PVS 102 without opening an account or registering with PVS 102, such as by using the SnapStamps product, for example.

The user request may include information identifying the user, credit-card or other like information which will be used by PVS 102 to bill for the purchased postage, the amount and value/denomination of the postage which the user wishes to purchase, and other like information which may be used by PVS 102 to process the request. If the user is a registered user and has a pre-established account with PVS 102, the user identification information may include a user identifier assigned by PVS 102 to the user during user registration. Further, for a registered user, PVS may use information provided by the user during the registration process for billing purposes, and consequently the credit-card or other like information may not be included in the user request. A single user request may request addition, as well as deletion of products, or the addition or deletion of multiple products contemporaneously.

User system 104 then communicates the user's subscription change request to PVS 102 via communication network 108 (step 506). According to an embodiment, a secure socket layer (SSL) connection may be established between user system 104 and PVS 102 to facilitate communication of information between user system 104 and PVS 102.

PVS 102 then receives the user request from user system 104 (step 508). PVS 102 may then compare the products requested by the user in the request with subscription information having the user's currently subscribed products (step 510). For example, PVS 102 may determine if the user is adding a particular product, or deleting a particular product. In a specific embodiment, the user of a product, such as PROMail, for example, can select to subscribe to another product, such as SnapStamps, for a temporary interval, such as a month. PVS 102 determines if the user's request requires a change in the hardware at the user's location (step 512). Further, PVS 102 determines if the user's request requires a change to an account maintained by the user with PVS 102 (step 514). Yet further, PVS 102 determines if the user's request requires a change to a postal license to comply with postal regulations (step 516). PVS 102 may also validate information in the request, such as the identity of the user requesting the subscription change, and the like.

PVS 102 makes the changes to subscription information as required by the differences between the stored subscription information and the user's requested subscription changes (step 518). In accordance with the consumer's wishes, the PVS 102 may distribute hardware to the consumer. For example, if the consumer selects only SnapStamps, no hardware is distributed because SnapStamps does not require hardware. Rather, the consumer is merely provided with the service. If the consumer subsequently chooses to add PC Stamp, the necessary enrollment changes are entered on-line, and the PSD hardware is sent to the consumer. If a consumer enrolled in SnapStamps chooses to add PROMail, the combined PSD and dedicated printer used by PROMail are sent to the consumer. If a consumer of PC Stamp chooses to add PROMail, the dedicated printer is sent, and the consumer combines it with the PSD already provided for use in conjunction with PC Stamp. A consumer of PROMail may later add PC Stamp, and operate either or both products from the PSD originally supplied with PROMail. Consumers of PC Stamp and/or PROMail may add SnapStamps or EZMail at any time, with no hardware changes or new software installation, as these products require only that the applicable parts of the software application be enabled.

PVS 102 may also generate a return merchandise authorization for the consumer, if the PVS 102 determines that the consumer no longer needs a particular piece of hardware. For example, a user of PROMail that decides to discontinue this product in favor of using SnapStamps exclusively no longer needs the postage label printer and PSD accompanying PROMail. In this case, PVS 102 generates an RMA that enables the consumer to return the PROMail hardware. PVS 102 also makes changes to account information, if required. For example, if a user of SnapStamps decides to add PROMail, PVS 102 will establish an account for the user. PVS 102 may also delete an account for a user that requests to terminate all services, for example. Further, PVS 102 may make changes to postage license information if it determines that the user's selection requires such changes.

If the operation of step 518 is successful (step 520), PVS 102 generates a message that is communicated to the requesting user system 104, indicating that the operation to handle the user's request was successful (step 522). If the operation processing in PVS 102 fails for any reason (step 520), the user's request may be terminated and a message is communicated to the requesting user system 104 indicating that the operation to handle the user's request was not successful (step 524). A reason for why the validation failed may also be provided.

### Printing Postage Indicia

In the SnapStamps product, the requesting user system 104 receives information for printing the postage indicium from PVS 102. The information received may be used to print the indicium. For example, a printer device coupled to user system 104 may be used to print the indicium (or indicia). According to an embodiment of the present invention, user system 104 may process the information received from PVS 102 before printing the indicium. In alternative embodiments of the present invention, the user may store the information for printing the indicia on a storage medium, such as a memory disk, for subsequent printing. The indicium may be printed on any suitable medium such as a label, paper, sheet of labels, envelopes, cards, directly on the mail piece/package, or other like media. One or more indicia may be printed at a time. The information for printing the indicium is then communicated from PVS 102 to the requesting user system via communication network 108.

The PROMail product comprises a PSD that sends a signed indicium message to the postage printer, which then formats the indicium and prints it on a postage label. In the PC Stamp product, the PSD sends a signed indicium message to a host, which formats the indicium for printing on a printer.

In each of the products, the indicium related information generated by PVS 102 is along the lines specified in the IBIP specifications published by the USPS. For each indicium, the information for printing the indicium may include a bitmap of the indicium, a graphical image of the indicium, data representing the indicium, raw data corresponding to the indicium, or any other information which facilitates printing of the indicium.

In order to reduce fraudulent imprinting of the indicium, the medium on which the indicium is printed may be configured to possess special features which provide enhanced security against fraudulent misuse. For example, the indicium may be printed on labels which may contain any or all of a variety of security features, such as bar-coding, microprinting, watermarking, use of fluorescent strips, serrated edges, taggants, and the like. If the indicium is printed on a special medium e.g. secure paper, the user may be prompted to make the special medium available to the printer and follow instructions related to the special medium before the indicium is printed. For example, the user may be prompted to feed a sheet of labels to the printer before the indicium is printed and select one or more labels on which the indicia is to be printed. The indicium or indicia may then be printed on one or more labels which may then be affixed onto the mail piece/package (just like an ordinary stamp purchased from the post office).

Several different techniques may be used for printing the indicium (or indicia). According to an embodiment, a printer program e.g. a "print.dll", may be downloaded to the user system 104 from PVS 102. The printer program may contain information required by the printer for printing the indicium and may control the printer and other peripheral devices, for example, a weighing machine, coupled to user system 104. The print program may be downloaded automatically from PVS 102 to user system 104 at regular time intervals, or may be downloaded upon the occurrence of specific events such as when the information for printing the indicium or indicia is communicated to user system 104 or when PVS 102 determines that a newer version of the print program is available. After downloading, the print program may be configured to automatically execute when required to control the printer used for printing the indicium. The printer program may include, for example, a Java applet, a VBScript, a Java Script, ActiveX controls, a C++ program, a C program, a Java program, etc. which may be downloaded by the user or which may be automatically downloaded by PVS 102 to user system 104. In an embodiment of the present invention wherein the print program is a Java applet, the applet may be executed by the browser program when a user selects the option to print the indicium.

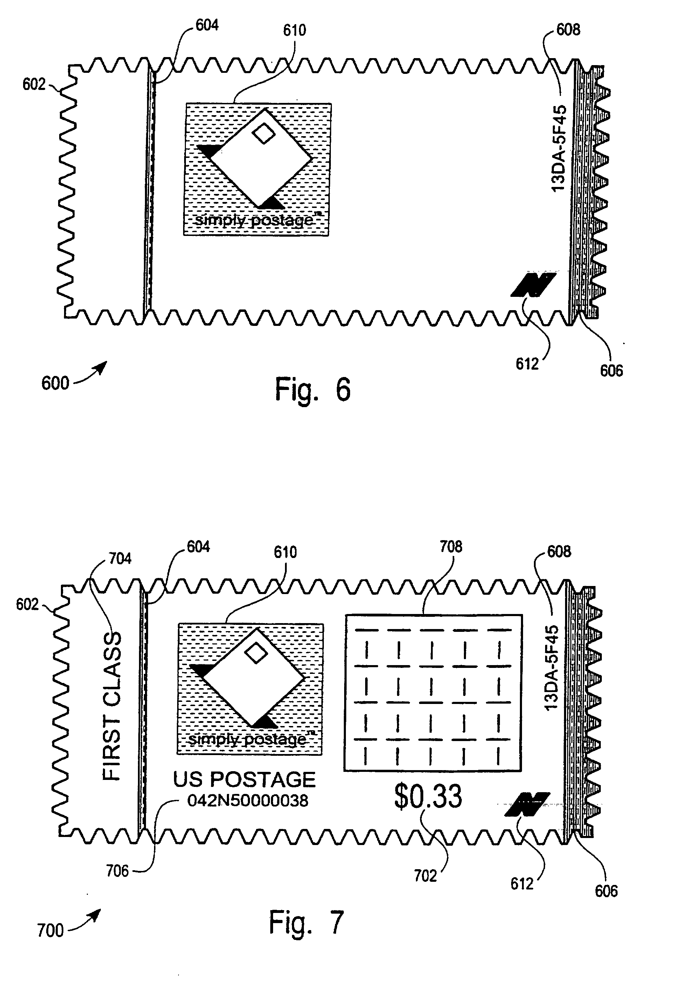

Fig. 6 depicts an exemplary individual pre-printed label 600 on which the indicium may be printed using the SnapStamps product according to an embodiment of the present invention. As shown in Fig. 6, label 600 has serrated edges 602 which not only serve as a security mechanism but also provide an aesthetic look and feel of a conventional U.S. postage stamp. Other security features imprinted on label 600 may include a colored stripe 604, lines of micro-print 606, a label serial number 608, a logo 610, and a watermark 612. These security features may be placed at different locations on label 600. The description of individual pre-printed label 600 depicted in Fig. 6 is intended only as a specific example for purposes of illustrating an embodiment of the present invention. Many other configurations of label 600 are possible having more or fewer features than those depicted in Fig. 6. While Fig. 6 illustrates an example of a postage label printed by the SnapStamps product, the other products can also use some of these security features as well.

The security features shown in Fig. 6 are meant to reduce fraudulent copying or misuse of the label with the indicium printed on it. For example, colored stripe 604 may be in a color, for example, fluorescent pink, which cannot be easily copied by black and white copiers. Micro-print 606 may include the name of the postage vendor printed in an intricate manner. For example, micro-print 606 may contain the name "Neopost" printed repetitively.

Individual labels may be serialized for increased security and the serial number corresponding to each label may be printed on the label, e.g. serial number 608 depicted in Fig. 6. As part of configuring the user postage request, the user may be required to enter the serial number of the label on which the indicium is to be printed. PVS 102 may maintain a list of all valid (available and unused) label serial numbers and serial numbers associated with labels may be invalidated by PVS 102 after indicia have been printed on the labels. In this manner, misuse or fraud can be detected if a label serial number received from the user refers to an invalidated serial number.

Logo 610 may display a logo of the postage vendor. In alternative embodiments, logo 610 displayed on label 600 may be selected or customized by the user purchasing the postage. Further, logo 610 need not be pre-printed on label 600, but may be downloaded to user system 104 along with the indicium or indicium data and then printed on label 600.

The different features printed on label 600 may be printed in special ink to further increase security. The paper on which label 600 is printed may itself be made of or contain special features to reduce fraudulent use. Further details related to the use of security features are discussed in U.S. Application No. 09/611,375, entitled "Providing Stamps On Secure Paper Using A Communications Network," filed July 7, 2000, the entire contents of which are herein incorporated by reference for all purposes.

Fig. 7 depicts an individual label 700 with an indicium printed on it according to an embodiment of the present invention. In addition to features of a blank label (described above with respect to Fig. 6), label 700 has an indicium printed on it which may include human readable information and machine readable information. For example, the human readable information of the indicium may include the postage amount or value 702 (e.g. $0.33), the mail class 704 of the postage (e.g. FIRST CLASS), and number 706 (e.g. 042N5DD00038). In the SnapStamps product, the number 706 corresponds to a PSD resource from the pool of PSD resources on PVS 102 which was used to generated the information for printing the indicium. In the PROMail and PC Stamp products, number 706 is based upon the identity of the PSD. Further details related to the use of PSD resources for generating information for printing the indicium are provided below.

The machine readable portion of the indicium may include a two-dimensional code 708, which may be for example a PDF-417 barcode format, a DataMatrix format, or other format. According to an embodiment of the present invention, two-dimensional code 708 is DataMatrix. According to an embodiment of the present invention, the indicium and the positioning of the indicium on label 700 conform generally to specifications described in the IBIP specifications.

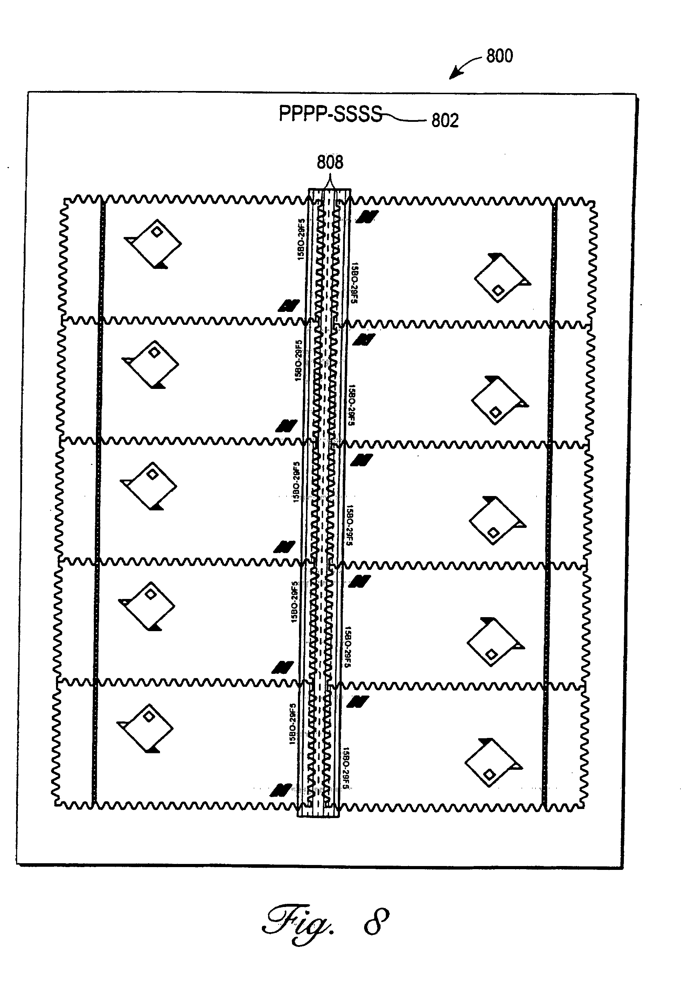

Fig. 8 depicts a sheet 800 of pre-printed labels according to an embodiment of the present invention. As shown in Fig. 8, sheet 800 comprises ten individual pre-printed labels depicted in Fig. 6. The number of individual labels on a sheet may vary in alternative embodiments of the present invention. Individual sheets may be serialized for increased security and a unique serial number corresponding to each sheet may be printed on the sheet, e.g. sheet serial number 802.

As part of configuring the user postage request, the user may be required to enter the unique serial number of the sheet on which the indicium is to be printed. PVS 102 may maintain a list of all available and valid sheet serial numbers and the number of unused labels corresponding to the sheets. After all the labels on a particular sheet have been used, the unique sheet serial number corresponding to the particular sheet may be invalidated by PVS 102. In this manner, misuse or fraud can be detected if the sheet serial number received from the user refers to an invalidated sheet serial number. According to an embodiment of the present invention, label serial number 808 printed on each label of a sheet may be the same as sheet serial number 802. In alternative embodiments, the sheets of labels may be serialized using a first set of numbers, and each of the labels on the sheets may themselves be serialized using a second set of numbers. Serializing both the sheets and the labels provides for increased security.

### Conclusion

Specific embodiments of the invention have a goal of increasing consumer choice to users of self print postage products, while manging administrative overhead for the supplier and the postal authorities.

As described above, the present invention provides techniques for managing a plurality of different postage-metering products having differing hardware requirements, facilitating different levels of usage, and accommodating different types of mail. The PROMail, EZMail and PC Stamp products are based upon an account established with the service company by the consumer, to engage in on-line interactions with the service company and/or the postal authorities. The SnapStamps product is not based upon consumer accounts. The user can purchase postal credit via SnapStamps merely by providing valid credit card information. The PROMail and PC Stamp products use hardware at the consumer's location to store postal credit, while the EZMail and SnapStamps products store the postal credit at the service provider, obviating the need for shipping a PSD to the consumer. These products make use of a license from the postal authorities. Specific embodiments exploit the commonality of the hardware and software elements of the different products to minimize the administrative burden to the consumer. Thus, in a specific embodiment, only one account with the supplier, and only one postal license, is used to access multiple products. The same account and license can be maintained if the consumer changes the selection of products. Procedures that are common to more than one product, such as on-line purchase of postal credit, are standard across the multiple products.

As further described above, the present invention provides techniques for marketing one postage-metering product, having multiple optional features. A common administrative structure can be implemented to provide service for a plurality of products, irrespective of which features are selected by the consumers. In specific embodiments, duplication of effort is reduced, and a continuous, ongoing relationship is fostered between the service provider and each consumer, irrespective of the consumer's changing selection of products.

Although specific embodiments of the invention have been described, various modifications, alterations, alternative constructions, and equivalents are also encompassed within the scope of the invention. The described invention is not restricted to operation within certain specific data processing environments, but is free to operate within a plurality of data processing environments. Additionally, although the present invention has been described using a particular series of transactions and steps, it should be apparent to those skilled in the art that the scope of the present invention is not limited to the described series of transactions and steps.

Further, while the present invention has been described using a particular combination of hardware and software, it should be recognized that other combinations of hardware and software are also within the scope of the present invention. The present invention may be implemented only in hardware or only in software or using combinations thereof.

The specification and drawings are, accordingly, to be regarded in an illustrative rather than a restrictive sense. It will, however, be evident that additions, subtractions, deletions, and other modifications and changes may be made thereunto without departing from the scope of the invention as set forth in the claims.

## Claims

1. A method for managing postage products, comprising:
causing information about a plurality of distinct postage dispensing products to be displayed;
receiving a selection of at least one of the plurality of distinct postage dispensing products;
comparing the received selection with subscription information about ones of the plurality of distinct postage dispensing products currently subscribed;
updating the subscription information based upon the received selection;
providing access to selected products based upon the updated subscription information.

2. The method of claim 1, wherein providing access to selected products based upon the updated subscription information comprises adding a subscription to the selected postage dispensing product if the selected postage dispensing product was not in the subscription information.

3. The method of claim 2, wherein adding a subscription comprises:
determining if hardware is required by the selected product; and if so,
determining whether the required hardware has not been previously sent to a consumer making the selection, and if so,
sending the required hardware to the consumer.

4. The method of claim 2, wherein adding a subscription comprises:
determining if an account is required by the selected product, and if so,
obtaining information about a consumer making the selection; and
creating an account for the consumer based upon the obtained information about the consumer.

5. The method of claim 2, wherein adding a subscription comprises:
determining if a postal license is required by the selected product, and if so,
obtaining information about a consumer making the selection; and
obtaining a postal license for the consumer based upon the obtained information about the consumer.

6. The method of claim 1, wherein providing access to selected products based upon the updated subscription information comprises deleting a subscription to a product deselected in the selection of at least one of the plurality of distinct postage dispensing products, if the deselected product was in the subscription information.

7. The method of claim 6, wherein deleting a subscription comprises:
determining of hardware is required by the deselected product, and if so,
determining whether deselecting the deselected product causes the hardware required by the deselected product to no longer be required by a consumer making the selection, and if so,
sending a return merchandise authorization for the hardware to the consumer.

8. The method of claim 6, wherein deleting a subscription comprises:
determining if an account is required by the deselected product, and if so,
determining if an account is required by any remaining products, and if an account is not longer required,
obtaining permission from a consumer making the selection to deactivate the account, and, if the permission is provided,
deactivating the account for the consumer.

9. The method of claim 6, wherein deleting a subscription comprises:
determining if a postal license is required by the deselected product, and if so,
determining if a postal license is required by any remaining products, and if the postal license is no longer required,
obtaining permission from a consumer making the selection to deactivate the postal license, and, if the permission is provided,
deactivating the postal license for the consumer.

10. An apparatus for managing postage products, comprising:
a processor;
a memory;
an input device;
a bus interconnecting the processor, the memory, the display, and the input device,
wherein the processor causes information about a plurality of distinct postage dispensing products to be displayed on the display; and
wherein the processor receives a selection of at least one of the plurality of distinct postage dispensing products from the input device, and thereupon the processor:
compares the selection of at least one of the plurality of distinct postage dispensing products with subscription information about ones of the plurality of distinct postage dispensing products currently subscribed,
updates the subscription information based upon the selection, and
provides access to selected products based upon the updated subscription information.

11. A computer program product for managing postage products, comprising:
code that causes information about a plurality of distinct postage dispensing products to be displayed;
code that receives a selection of at least one of the plurality of distinct postage dispensing products;
code that compares the selection with subscription information about ones of the plurality of products currently subscribed;
code that updates the subscription information based on the selection;
code that provides access to selected products based upon the updated subscription information; and
a computer readable storage medium for storing the codes.

12. The computer program product of claim 11, wherein providing access to selected products based upon the updated subscription information comprises adding a subscription to a product selected in the selection, if the product was not in the subscription information.

13. The computer program product of claim 12, wherein code that adds a subscription comprises:
code that determines if hardware is required by the selected product;
code that determines whether the hardware has not been previously sent to a consumer making the selection; and
code that specifies whether hardware is to be sent to the consumer.

14. The computer program product of claim 12, wherein code that adds a subscription comprises:
code that determines if an account is required by the selected product;
code that obtains information about a consumer making the selection; and
code that creates an account for the consumer based upon the obtained information.

15. The computer program product of claim 12, wherein code that adds a subscription comprises:
code that determines if a postal license is required by the selected product;
code that obtains information about a consumer making the selection; and
code that obtains a postal license for the consumer based upon the obtained information.

16. The computer program product of claim 11, wherein code that provides access to selected products based upon the updated subscription information comprises code that deletes a subscription to a product deselected in the selection, if the deselected product was in the subscription information.

17. The computer program product of claim 16, wherein the code that deletes a subscription comprises:
code that determines if hardware is required by the deselected product;
code that determines if whether deselecting the product causes the hardware to no longer be required by a consumer making the selection; and
code that sends a return merchandise authorization for the hardware to the consumer.

18. The computer program product of claim 16, wherein said code that deletes a subscription comprises:
code that determines if an account is required by the deselected product;
code that determines if the account is required by any remaining products;
code that obtains permission from a consumer making the selection to deactivate the account; and,
code that deactivates the account for the consumer, if the permission is provided.

19. The computer program product of claim 16, wherein the code that deletes a subscription comprises:
code that determines if a postal license is required by the deselected product;
code that determines if the postal license is required by any remaining products;
code that obtains permission from a consumer making the selection to deactivate the postal license; and
code that deactivates the postal license for the consumer.

20. A system for managing postage products, comprising:
at least one of a plurality of clients:
at least one or more servers;
a first network interconnecting the at least one of a plurality of clients and the at least one or more servers;
a database;
a second network interconnecting the at least one or more servers and the database, wherein the at least one or more servers causes information about at least one of a plurality of distinct postage dispensing products to be displayed at the at least one of a plurality of clients; and
wherein the at least one of a plurality of clients receives a selection of at least one of said plurality of distinct postage dispensing products from an input device, and thereupon, the at least one of a plurality of clients:
forwards the selection to the at least one or more servers for comparing the selection with subscription information stored in the database about ones of the plurality of products currently subscribed,
updates the subscription information based on the selection, and
provides access to selected products based upon the updated subscription information.

## Patentansprüche

1. Verfahren zum Verwalten von Porto-Produkten, umfassend folgende Schritte:
Veranlassen, dass Informationen über mehrere eigenständige Portoausgabeprodukte angezeigt werden;
Erhalten einer Auswahl wenigstens eines der mehreren eigenständigen Portoausgabeprodukte;
Vergleichen der erhaltenen Auswahl mit Bestellinformationen über solche der mehreren eigenständigen Portoausgabeprodukte, die momentan bestellt sind;
Aktualisieren der Bestellinformationen anhand der erhaltenen Auswahl;
Gewähren von Zugang zu ausgewählten Produkten anhand der aktualisierten Bestellinformationen.

2. Verfahren nach Anspruch 1, wobei das Gewähren von Zugang zu ausgewählten Produkten anhand der aktualisierten Bestellinformationen das Hinzufügen einer Bestellung zu dem ausgewählten Portoausgabeprodukt umfasst, wenn das ausgewählte Portoausgabeprodukt nicht in den Bestellinformationen enthalten war.

3. Verfahren nach Anspruch 2, wobei das Hinzufügen einer Bestellung folgendes umfasst:
Ermitteln, ob das ausgewählte Produkt Hardware verlangt, und wenn ja,
Ermitteln, ob die verlangte Hardware nicht schon zuvor an einen Verbraucher, der die Auswahl trifft, versandt wurde, und wenn sie nicht schon zuvor versandt wurde,
Senden der verlangten Hardware an den Verbraucher.

4. Verfahren nach Anspruch 2, wobei das Hinzufügen einer Bestellung folgendes umfasst:
Ermitteln, ob durch das ausgewählte Produkt ein Konto verlangt wird, und wenn ja,
Erlangen von Informationen über einen Verbraucher, der die Auswahl trifft, und
Erstellen eines Kontos für den Verbraucher anhand der über den Verbraucher erlangten Informationen.

5. Verfahren nach Anspruch 2, wobei das Hinzufügen einer Bestellung folgendes umfasst:
Ermitteln, ob durch das ausgewählte Produkt eine postalische Lizenz verlangt wird, und wenn ja,
Erlangen von Informationen über einen Verbraucher, der die Auswahl trifft, und
Erlangen einer postalischen Lizenz für den Verbraucher anhand der über den Verbraucher erlangten Informationen.

6. Verfahren nach Anspruch 1, wobei das Gewähren von Zugang zu ausgewählten Produkten anhand der aktualisierten Bestellinformationen das Löschen einer Bestellung eines Produkts, das in der Auswahl wenigstens eines der mehreren eigenständigen Portoausgabeprodukte abgewählt wurde, umfasst, wenn das abgewählte Produkt in den Bestellinformationen enthalten war.

7. Verfahren nach Anspruch 6, wobei das Löschen einer Bestellung folgendes umfasst:
Ermitteln, ob durch das abgewählte Produkt Hardware verlangt wird, und wenn ja,
Ermitteln, ob das Abwählen des abgewählten Produkts bewirkt, dass die durch das abgewählte Produkt verlangte Hardware nicht länger durch einen Verbraucher, der die Auswahl trifft, verlangt wird, und wenn sie nicht länger verlangt wird,
Senden einer Warenrückgabeerlaubnis für die Hardware an den Verbraucher.

8. Verfahren nach Anspruch 6, wobei das Löschen einer Bestellung folgendes umfasst:
Ermitteln, ob durch das abgewählte Produkt ein Konto verlangt wird, und wenn ja,
Ermitteln, ob durch ein verbleibendes Produkt ein Konto verlangt wird, und wenn kein Konto mehr verlangt wird,
Erlangen der Erlaubnis von einem Verbraucher, der die Auswahl trifft, das Konto zu deaktivieren, und wenn die Erlaubnis erteilt wird,
Deaktivieren des Kontos für den Verbraucher.

9. Verfahren nach Anspruch 6, wobei das Löschen einer Bestellung folgendes umfasst:
Ermitteln, ob durch das abgewählte Produkt eine postalische Lizenz verlangt wird, und wenn ja,
Ermitteln, ob durch ein verbleibendes Produkt eine postalische Lizenz verlangt wird, und wenn die postalische Lizenz nicht mehr verlangt wird, Erlangen der Erlaubnis von einem Verbraucher, der die Auswahl trifft, die postalische Lizenz zu deaktivieren, und wenn die Erlaubnis erteilt wird,
Deaktivieren der postalischen Lizenz für den Verbraucher.

10. Vorrichtung zum Verwalten von Porto-Produkten, die folgendes umfasst:
einen Prozessor;
einen Speicher;
eine Anzeige,
eine Eingabevorrichtung;
einen Bus, der den Prozessor, den Speicher, die Anzeige und die Eingabevorrichtung untereinander verbindet,
wobei der Prozessor veranlasst, dass Informationen über mehrere eigenständige Portoausgabeprodukte auf der Anzeige angezeigt werden; und
wobei der Prozessor eine Auswahl wenigstens eines der mehreren eigenständigen Portoausgabeprodukte von der Eingabevorrichtung erhält, woraufhin der Prozessor:
die Auswahl wenigstens eines der mehreren eigenständigen Portoausgabeprodukte mit Bestellinformationen über solche der mehreren eigenständigen Portoausgabeprodukte, die momentan bestellt sind, vergleicht;
die Bestellinformationen anhand der Auswahl aktualisiert; und
Zugang zu ausgewählten Produkten anhand der aktualisierten Bestellinformationen gewährt.

11. Computerprogrammprodukt zum Verwalten von Porto-Produkten, das folgendes umfasst:
einen Code, der veranlasst, dass Informationen über mehrere eigenständige Portoausgabeprodukte angezeigt werden;
einen Code, der eine Auswahl wenigstens eines der mehreren eigenständigen Portoausgabeprodukte erhält;
einen Code, der die Auswahl mit Bestellinformationen über solche der mehreren Produkte, die momentan bestellt sind, vergleicht;
einen Code, der die Bestellinformationen anhand der Auswahl aktualisiert;
einen Code, der Zugang zu ausgewählten Produkten anhand der aktualisierten Bestellinformationen gewährt; und
ein computerlesbares Speichermedium zum Speichern der Codes.

12. Computerprogrammprodukt nach Anspruch 11, wobei das Gewähren von Zugang zu ausgewählten Produkten anhand der aktualisierten Bestellinformationen das Hinzufügen einer Bestellung zu einem Produkt, das in der Auswahl ausgewählt wurde, umfasst, wenn das Produkt nicht in den Bestellinformationen enthalten war.

13. Computerprogrammprodukt nach Anspruch 12, wobei der Code, der eine Bestellung hinzufügt, folgendes umfasst:
einen Code, der ermittelt, ob durch das ausgewählte Produkt Hardware verlangt wird;
einen Code, der ermittelt, ob die Hardware nicht schon zuvor an einen Verbraucher, der die Auswahl trifft, versandt wurde,
einen Code, der vorgibt, ob Hardware an den Verbraucher gesandt werden soll.

14. Computerprogrammprodukt nach Anspruch 12, wobei der Code, der eine Bestellung hinzufügt, folgendes umfasst:
einen Code, der ermittelt, ob durch das ausgewählte Produkt ein Konto verlangt wird;
einen Code, der Informationen über einen Verbraucher, der die Auswahl trifft, erlangt; und
einen Code, der ein Konto für den Verbraucher anhand der erlangten Informationen erstellt.

15. Computerprogrammprodukt nach Anspruch 12, wobei der Code, der eine Bestellung hinzufügt, folgendes umfasst:
einen Code, der ermittelt, ob durch das ausgewählte Produkt eine postalische Lizenz verlangt wird;
einen Code, der Informationen über einen Verbraucher, der die Auswahl trifft, erlangt; und
einen Code, der eine postalische Lizenz für den Verbraucher anhand der erlangten Informationen erlangt.

16. Computerprogrammprodukt nach Anspruch 11, wobei ein Code, der Zugang zu ausgewählten Produkten anhand der aktualisierten Bestellinformationen gewährt, einen Code umfasst, der eine Bestellung eines Produkts, das in der Auswahl abgewählt wurde, löscht, wenn das abgewählte Produkt in den Bestellinformationen enthalten war.

17. Computerprogrammprodukt nach Anspruch 16, wobei der Code, der eine Bestellung löscht, folgendes umfasst:
einen Code, der ermittelt, ob durch das abgewählte Produkt Hardware verlangt wird;
einen Code, der ermittelt, ob das Abwählen des Produkts bewirkt, dass die Hardware nicht länger durch einen Verbraucher, der die Auswahl trifft, verlangt wird; und
einen Code, der eine Warenrückgabeerlaubnis für die Hardware an den Verbraucher sendet.

18. Computerprogrammprodukt nach Anspruch 16, wobei der Code, der eine Bestellung löscht, folgendes umfasst:
einen Code, der ermittelt, ob durch das abgewählte Produkt ein Konto verlangt wird;
einen Code, der ermittelt, ob durch ein verbleibendes Produkt das Konto verlangt wird;
einen Code, der von einem Verbraucher, der die Auswahl trifft, eine Erlaubnis einholt, das Konto zu deaktivieren; und
einen Code, der das Konto für den Verbraucher deaktiviert, wenn die Erlaubnis gewährt wird.

19. Computerprogrammprodukt nach Anspruch 16, wobei der Code, der eine Bestellung löscht, folgendes umfasst:
einen Code, der ermittelt, ob durch das abgewählte Produkt eine postalische Lizenz verlangt wird;
einen Code, der ermittelt, ob durch ein verbleibendes Produkt die postalische Lizenz verlangt wird;
einen Code, der von einem Verbraucher, der die Auswahl trifft, eine Erlaubnis einholt, die postalische Lizenz zu deaktivieren; und
einen Code, der die postalische Lizenz für den Verbraucher deaktiviert.

20. System zum Verwalten von Porto-Produkten, das folgendes umfasst:
wenigstens einen von mehreren Clients;
wenigstens einen von einem oder mehreren Servern;
ein erstes Netzwerk, das den wenigstens einen von mehreren Clients und den wenigstens einen von einem oder mehreren Servern untereinander verbindet;
eine Datenbank;
ein zweites Netzwerk, das den wenigstens einen von einem oder mehreren Servern und die Datenbank miteinander verbindet, wobei der wenigstens eine von einem oder mehreren Servern veranlasst, dass Informationen über wenigstens eines von mehreren eigenständigen Portoausgabeprodukten an dem wenigstens einen von mehreren Clients angezeigt wird; und
wobei der wenigstens eine von mehreren Clients eine Auswahl von wenigstens einem der mehreren eigenständigen Portoausgabeprodukte von einer Eingabevorrichtung empfängt, woraufhin der wenigstens eine von mehreren Clients:
die Auswahl an den wenigstens einen von einem oder mehreren Servern weiterleitet, damit die Auswahl mit in der Datenbank gespeicherten Bestellinformationen über solche der mehreren Produkte, die momentan bestellt sind, verglichen wird;
die Bestellinformationen anhand der Auswahl aktualisiert; und
Zugang zu ausgewählten Produkten anhand der aktualisierten Bestellinformationen gewährt.

## Revendications

1. Procédé de gestion de produits d'affranchissement, comprenant les opérations suivantes :
faire en sorte que les informations se rapportant à une pluralité de produits de distribution d'affranchissement distincts soient affichés ;
recevoir une sélection d'au moins un produit de la pluralité de produits de distribution d'affranchissement distincts ;
comparer la sélection reçue avec des informations d'abonnement se rapportant à certains produits de la pluralité de produits de distribution d'affranchissement distincts faisant l'objet d'un abonnement courant ;
mettre à jour les informations d'abonnement sur la base de la sélection reçue ;
fournir un accès à des produits sélectionnés sur la base des informations d'abonnement mises à jour.

2. Procédé selon la revendication 1, où la fourniture d'un accès à des produits sélectionnés sur la base des informations d'abonnement mises à jour comprend l'opération consistant à ajouter un abonnement au produit de distribution d'affranchissement sélectionné si le produit de distribution d'affranchissement sélectionné ne se trouvait pas dans les informations d'abonnement.

3. Procédé selon la revendication 2, où le fait d'ajouter un abonnement comprend les opérations suivantes :
déterminer si un équipement matériel est nécessaire pour le produit sélectionné ; et
s'il en est ainsi, déterminer si l'équipement matériel n'a pas été précédemment envoyé à un client ayant effectué la sélection, et,
s'il ne lui a pas été envoyé, envoyer au client l'équipement matériel nécessaire.

4. Procédé selon la revendication 2, où l'opération consistant à ajouter un abonnement comprend les opérations suivantes :
déterminer si un compte est nécessité par le produit sélectionné, et
si c'est le cas, obtenir des informations concernant un client ayant effectué la sélection ; et
créer un compte pour le client sur la base des informations ainsi obtenues au sujet du client.

5. Procédé selon la revendication 2, où l'opération consistant à ajouter un abonnement comprend les opérations suivantes :
déterminer si une licence postale est nécessitée par le produit sélectionné, et
s'il en est ainsi, obtenir des informations sur un client ayant effectué la sélection ; et
obtenir une licence postale pour le client sur la base des informations obtenues à son sujet.

6. Procédé selon la revendication 1, où la fourniture d'un accès à des produits sélectionnés qui est basée sur les informations d'abonnement mises à jour comprend l'opération consistant à supprimer l'abonnement à un produit désélectionné lors de la sélection d'au moins un produit de la pluralité de produits de distribution d'affranchissement distincts, si le produit désélectionné était dans les informations d'abonnement.

7. Procédé selon la revendication 6, où l'opération consistant à supprimer un abonnement comprend les opérations suivantes :
déterminer si un équipement matériel est nécessité par le produit désélectionné, et
s'il en est ainsi, déterminer si la désélection du produit désélectionné a pour effet que l'équipement matériel nécessité par le produit désélectionné n'est plus nécessité par le client ayant effectué la sélection, et
s'il en est ainsi, envoyer au client une autorisation de marchandise en retour pour l'équipement matériel.

8. Procédé selon la revendication 6, où l'opération consistant à supprimer un abonnement comprend les opérations suivantes :
déterminer si un compte est nécessité par le produit désélectionné, et
s'il en est ainsi, déterminer si un compte est nécessité par des produits restants quelconques, et
si un compte n'est plus nécessaire, obtenir de la part du client ayant effectué la sélection, la permission de désactiver le compte, et
si la permission est fournie, désactiver le compte du client.

9. Procédé selon la revendication 6, où l'opération consistant à supprimer un abonnement comprend les opérations suivantes :
déterminer si une licence postale est nécessitée par le produit désélectionné, et
s'il en est ainsi, déterminer si une licence postale est nécessitée par des produits restants quelconques, et
si la licence postale n'est plus nécessaire, obtenir, de la part du client ayant effectué la sélection, la permission de désactiver la licence postale, et
si la permission est fournie, désactiver la licence postale du client.

10. Appareil permettant de gérer des produits d'affranchissement, comprenant :
un processeur ;
une mémoire ;
un dispositif d'affichage ;
un dispositif d'entrée ;
un bus interconnectant le processeur, la mémoire, le dispositif d'affichage et le dispositif d'entrée,
où le processeur fait en sorte que des informations se rapportant à une pluralité de produits de distribution d'affranchissement distincts soient affichées sur le dispositif d'affichage ; et
où le processeur reçoit une sélection d'au moins un produit de la pluralité de produits de distribution d'affranchissement distincts de la part du dispositif d'entrée, après quoi le processeur :
compare la sélection d'au moins un produit de la pluralité de produits de distribution d'affranchissement distincts avec des informations d'abonnement se rapportant à certains produits de la pluralité de produits de distribution d'affranchissement distincts pour lesquels il existe un abonnement en cours,
met à jour les informations d'abonnement sur la base de la sélection, et
fournit un accès à des produits sélectionnés sur la base des informations d'abonnement mises à jour.

11. Produit programme d'ordinateur servant à gérer des produits d'affranchissement, qui comprend :
un code qui fait en sorte que des informations se rapportant à une pluralité de produits de distribution d'affranchissement distincts soient affichées ;
un code qui reçoit une sélection d'au moins un produit de la pluralité de produits de distribution d'affranchissement distincts ;
un code qui compare la sélection avec des informations d'abonnement se rapportant à certains produits de la pluralité de produits pour lesquels un abonnement est en cours ;
un code qui met à jour des informations d'abonnement sur la base de la sélection ;
un code qui fournit un accès à des produits sélectionnés sur la base des informations d'abonnement mises à jour ; et
un support de stockage pouvant être lu par un ordinateur, qui sert à stocker les codes.

12. Produit programme d'ordinateur selon la revendication 11, où la fourniture d'un accès à des produits sélectionnés sur la base des informations d'abonnement mises à jour comprend l'opération consistant à ajouter un abonnement à un produit sélectionné dans la sélection, si le produit n'était pas parmi les informations d'abonnement.

13. Produit programme d'ordinateur selon la revendication 12, où le code qui ajoute un abonnement comprend :
un code qui détermine si un équipement matériel est nécessité par le produit sélectionné ;
un code qui détermine si l'équipement matériel n'a pas été précédemment envoyé à un client ayant fait la sélection ; et
un code qui spécifie si l'équipement matériel doit être envoyé au client.

14. Produit programme d'ordinateur selon la revendication 12, où le code qui ajoute un abonnement comprend :
un code qui détermine si un compte est nécessité par le produit sélectionné ;
un code qui obtient des informations sur un client ayant effectué la sélection ; et
un code qui crée un compte pour le client sur la base des informations ainsi obtenues.

15. Produit programme d'ordinateur selon la revendication 12, où le code qui ajoute un abonnement comprend :
un code qui détermine si une licence postale est nécessitée par le produits sélectionné ;
un code qui obtient des informations au sujet d'un client ayant effectué la sélection ; et
un code qui obtient une licence postale pour le consommateur sur la base des informations obtenues.

16. Produit programme d'ordinateur selon la revendication 11, où le code qui fournit un accès à des produits sélectionnés sur la base des informations d'abonnement mises à jour comprend un code qui supprime un abonnement à un produit désélectionné dans la sélection, si le produit désélectionné était dans les informations d'abonnement.

17. Produit programme d'ordinateur selon la revendication 16, où le code qui supprime un abonnement comprend :
un code qui détermine si un équipement matériel est nécessité par le produit sélectionné ;
un code qui détermine si la désélection du produit a pour effet que l'équipement matériel n'est plus nécessaire pour un client ayant effectué la sélection ; et
un code qui envoie au client une autorisation de marchandise en retour pour l'équipement matériel.

18. Produit programme d'ordinateur selon la revendication 16, où ledit code qui supprime un abonnement comprend :
un code qui détermine si un compte est nécessité par le produit désélectionné ;
un code qui détermine si le compte est nécessité par des produits restants quelconques ;
un code qui obtient la permission, de la part d'un client ayant effectué la sélection, de désactiver le compte ; et
un code qui désactive le compte du client, si la permission en est fournie.

19. Produit programme d'ordinateur selon la revendication 16, où le code qui supprime un abonnement comprend :
un code qui détermine si une licence postale est nécessitée par le produit désélectionné ;
un code qui détermine si la licence postale est nécessitée par des produits restants quelconques ;
un code qui obtient la permission, de la part d'un client ayant effectué la sélection, de désactiver la licence postale ; et
un code qui désactive la licence postale du client.

20. Système permettant de gérer des produits d'affranchissement, comprenant :
au moins un client parmi une pluralité de clients ;
au moins un d'un ou de plus d'un serveur ;
un premier réseau interconnectant ledit au moins un client parmi la pluralité de clients et ledit au moins un d'un ou de plus d'un serveur ;
une base de données ;
un deuxième réseau interconnectant ledit au moins un d'un ou de plus d'un serveur et la base de données, où ledit au moins un d'un ou de plus d'un serveur fait en sorte que les informations se rapportant à au moins un produit d'une pluralité de produits de distribution d'affranchissement distincts soient affichées chez ledit au moins un client de la pluralité de clients ; et
où ledit au moins un client de la pluralité de clients reçoit une sélection d'au moins un produit de ladite pluralité de produits de distribution d'affranchissement distincts de la part d'un dispositif d'entrée, après quoi ledit au moins un client de la pluralité de clients :
adresse la sélection audit un d'un ou de plus d'un serveur afin de comparer la sélection avec des informations d'abonnement stockées dans la base de données au sujet de certains produits de la pluralité de produits pour lesquels des abonnements sont en cours,
met à jour des informations d'abonnement sur la base de la sélection, et
fournit un accès à des produits sélectionnés sur la base des informations d'abonnement mises à jour.
